# EUROPEAN PATENT APPLICATION

(11) **EP 3 511 858 A1**
(43) Date of publication of application: **17.07.2019**
(21) Application number: 18151345.8
(22) Date of filing: 12.01.2018
(51) Int. Cl.: G06F 21/62

(54) **UPDATE OF MAC SECURITY SETTINGS IN AUTONOMOUS INDUSTRIAL CONTROL DEVICES**

(71) Applicant: Siemens Aktiengesellschaft, 80333 München (DE)
(72) Inventor: Belhachemi, Omar, 80639 München (DE); Falk, Rainer, 85586 Poing (DE); Feist, Christian Peter, 80689 München (DE); Fischer, Kai, 85598 Baldham (DE); Friedrich, Daniela, 81541 München (DE); Fries, Steffen, 85598 Baldham (DE); Heintel, Markus, 81377 München (DE)

(57) **Abstract**

The present invention relates to a method, system and device (D) for enforcing an updated security setting (102) on a device, which is an autonomous electronic control device (D),
- Receiving (1000) a software installation file (10) for update or installation of an application for execution on the device (D),
∘ wherein the software installation file (10) is protected; and
∘ wherein the software installation file (10) comprises or references executable program code (100);
∘ wherein the software installation file (10) comprises or references at least one updated security setting (102); and

- Verifying (2000) the received software installation file (10) by applying a first cryptographic algorithm for providing the updated security setting (102);
- enforcing (3000) the updated security setting (102).

## Description

The present invention refers to a method, device and system for updating a security mechanism for an electronic computer system, which may be an embedded system, which have to be operated in an autonomous manner, i.e. without a human administrator.

An embedded system may comprise a microcontroller, which typically may be dedicated to a particular task within a technical device (e.g. in automation systems or for use in avionics or in automotive systems, devices are used for control of the motor system, the window movement and respective motors etc.). A microcontroller usually comprises a central processing unit (CPU), a system clock, memory and peripherals. The CPU runs the operating system, for example Linux. A core element of the operating system, the system kernel, is typically responsible for control of the applications, which are executed on the device and for enforcing security settings for protection against security-related attacks.

In state of the art, different security mechanisms are known, like user-defined Discretionary Access Control (DAC) and Mandatory Access Control (MAC) mechanisms, which are enforced (typically by the kernel of an operating system) independently from user-defined permissions or settings. The security benefit of a MAC mechanism is that it is enforced centrally by the kernel, with all security rules defined in a central policy. As a result, the security settings can only be altered by a dedicated administrator, as opposed to DAC, where access is controlled through settings made by the individual users.

As autonomously working devices usually operate automatically in the field, user defined security settings are usually not applicable. Therefore, the devices can be manufactured and equipped with a pre-configured MAC mechanism that can be used to define and enforce security settings for applications and processes running on the device. The security settings constrain and restrict access to objects based on the sensitivity of the information contained in the objects and the formal authorization of subjects to access information of such sensitivity (see TCSEC definitions). Thus, whenever a process or application attempts to access a file or another resource, a security setting enforced by the operating system kernel examines the security attributes and decides whether the access can take place. Any operation by any process on any object is tested against the set of security settings, defined in a MAC policy, to determine if the operation is allowed.

In systems, based on mandatory access control, the security policy is typically centrally controlled and defined once before the device is taken into operation. Any changes with respect to the security settings during operation of the device are difficult or even problematic, especially in autonomously working devices that are already deployed in the field.

However, there is a need to provide a flexible update mechanism for security settings even after commissioning or start-up of the device during its operation without having to update the device firmware whilst at the same time protection of the update mechanism against attacks is ensured.

Therefore, it is an object of the present invention to improve the security mechanisms for an autonomous industrial device. In particular, the update for security settings should be protected automatically on the device and without human interaction.

This object is achieved by a method, a system, a device, and a computer program according to the pending independent claims. Advantageous features and embodiments are mentioned in the dependent claims and in the description.

According to a first aspect, the invention relates to a method for enforcing at least one updated security setting (for example a MAC policy) on a device, which is an autonomous electronic control device (e.g. in an embedded system).

The method comprises the following steps:
- Receiving a software installation file for update or installation of an application for execution - in a runtime environment - locally on the device. The software installation file is protected. It is signed with a signature to provide and/or proof authenticity and integrity. The software installation file comprises or references executable program code (e.g. a binary file with firmware or software for update or installation of the application) and further comprises or references at least one security setting (for example a MAC policy or a part thereof or a Delta policy) or an update thereof.
- Verifying a signature of the received software installation file by applying a first cryptographic algorithm, in particular a first cryptographic checksum algorithm, locally on the device for providing the security setting.
- Enforcing the provided security setting (in case of correct verification).

A core idea of the invention is based on the fact that an updated security setting may be introduced via an application program update. For this purpose, a software installation file is provided for update of an existing application on the device or for a new installation of an application on the device. This software installation file is to be protected dedicatedly to prevent attackers from introducing malicious code segments in the file. Further, the protection and the enforcement of the updated security settings are executed in a completely autonomous manner locally on the device and even during runtime of the operating system. So, it is not required that a user, e.g., an administrator, changes security settings on the device. Typically, a set of security settings is provided and enforced. Therefore, in this this application usually the term "security setting" is used in the plural. In this case the term "security setting" also refers to a set of security parameters. Generally, the installation or deployment of (new or updated/amended) security settings is combined with an application update or new installation on the device. The security setting related data are packaged within a message for an application update, transmitted to the device.

The provided security settings are enforced during installation and/or execution of the executable program code included in the installation file. In a preferred embodiment the installation file comprises two security settings, first security settings that are enforced during installation of the installation file, and second security settings that are enforced during execution of the installed program code. The second security settings may be enabled as long as the program code is installed. In a different variant, the second security settings are enabled only when the second program code is executed.

According to a preferred embodiment of the present invention, the software installation file is a firmware update or a loadable application. This has the technical effect that updated security settings may be incorporated into a file, which will be used by the system anyway.

According to another preferred embodiment of the present invention, the updated security setting is a centrally controlled setting, which is enforced independently from user-defined permissions and, in particular, is a MAC policy.

According to another preferred embodiment of the present invention, the security setting is updated in reply to a device configuration parameter set, which is detected locally and directly on the device. This has the technical advantage that the security setting update process may be executed specifically for the particular purpose, function and/or application context of the device. The device configuration parameter set may be a set of configuration parameter data of the device, like e.g. indicating special use/application requirements (processing resources, like memory or processing power etc.) or time intervals or security domains on the device which should be updated etc.

According to another preferred embodiment of the present invention, the updated security setting comprises a delta policy with a description of changes in the updated security setting compared to a preceding or prior security setting, which was active before. This reduces transmission resources.

According to another preferred embodiment of the present invention, the updated security setting is directly incorporated in the software installation file. Another preferred option is to indirectly incorporate the same via a reference or a link which is accessible via peripherals or device interfaces. The incorporation via link or reference has the advantage that the software installation file size may be reduced, which in turn saves transmission resources.

According to another preferred embodiment of the present invention, the updated security setting is protected with a second cryptographic checksum (and corresponding second checksum algorithm) in addition to the first cryptographic checksum (and corresponding first checksum algorithm), which is used to protect the software installation file. This improves security. A second cryptographic key may be used for the second cryptographic checksum that is different to the first cryptographic key used for the first cryptographic checksum. The part of the software installation file that is protected by the second cryptographic checksum may comprise, besides the updated security setting, a cryptographic hash value of the program code included in the software installation file.

According to another preferred embodiment of the present invention, the first and/or second cryptographic checksum is/are based on an asymmetric cryptographic or encryption process or on a public-private key pair system. This accomplishes two functions: authentication and optionally encryption of the received data. In particular, a central control node (computing unit) can encrypt a message comprising the software installation file using the device's public key. That encrypted message can only be decrypted with the device's private key, whereas the device's public key can be openly distributed within the network without compromising security. The usage of an asymmetric encryption (public key based) mechanism has the advantage that it does not require a secure channel for the initial exchange of one (or more) secret keys between the sending node and the receiving node.

According to another preferred embodiment, the first and/or second cryptographic (checksum) algorithm is/are may be based on a symmetric encryption process, which is typically less complex and faster than the asymmetric process.

In another further embodiment, an asymmetric encryption process may be used in combination with a symmetric one. For example, due to its computational complexity, the asymmetric encryption may be used only for transferring a symmetric encryption key (e.g. a security setting update session key). This symmetric key is then used to encrypt the complete message with the software installation file and the two segments, mentioned above.

The public key signature system may be applied to create a short digital signature on the message to be transferred between a central control node and the particular device by combining the message to be transferred with a private key (of the central node). The device, in turn, with the corresponding public key can combine the received message, a pretended digital signature on it, and use the known public key to verify whether the signature was validly made by the central control node using the corresponding private key. Thus, attackers, trying to incorporate malicious data in the software installation file by changing the message, will cause verification on the device to fail. Thus, the authenticity of the message can be demonstrated by the signature, provided the private key is kept secret. Using a public key cryptographic algorithm assures the integrity and authenticity of the update process and corresponding data transmission between the central control node and the devices and data storage.

According to another preferred embodiment, the security setting is first switched to another temporary security setting before the updated security setting is applied, in case the security setting does not allow changing applications on the device at all. For example, the local security setting (e.g. MAC policy) may be configured such that loading or incorporating firmware updates or installing (new) applications is generally not allowed. Thus, receiving a software installation file on the device would not be possible without prior execution of adaptations. One possible adaptation would be to apply a temporary security setting, which allows such changes. The sequence of verification steps may be changed. After having applied the temporary security setting, the intended updated security setting may be applied.

Also, it is possible to provide different security settings on the device. A first security setting may for example be valid before the update and a second security setting after the update. Another option is to have a first security setting for a first set of applications and a second security setting for a second set of applications, where the number is not restricted. In another embodiment, the first security setting may be applied for a first security domain and a second security setting may be applied for a second security domain, where a security domain relates to a logical grouping of rules in a security setting, e.g. MAC policy. An application is allocated to a security domain when it is started.

In a preferred embodiment, the method comprises to determine which key was used for protection of the software installation file and based on the determination (of the used key) a decision algorithm determines if at all and if yes, to what extent the security setting on the device may be changed. The determination may be executed within the first cryptographic (checksum) algorithm.

In a preferred embodiment, the first cryptographic algorithm is a checksum algorithm that accesses a "corresponding" public key, i.e. a key which corresponds or is allocated to the received software installation file. The corresponding public key is stored on the device for verification of the digital signature or protection of the software installation file. The public key usually is one part of the public-private key pair in an asymmetric cryptographic process.

A second key which serves as a signature key may be provided in the system and used to automatically determine if and if yes, to what extent a security setting, which was included in the software installation file and is now provided on the device may be changed or updated. According to a possible embodiment, it thus is possible that a firmware or application update will only be accepted if the security settings included in the software installation file is digitally signed and thus verifiable with the second key.

In another aspect the invention refers to a computer program with program code for executing a method as described above, if the computer program is executed on an autonomous electronic control device and in particular in a kernel of an operating system of the device.

In another aspect the invention refers to an autonomous electronic control device with an updater unit for updating and enforcing an updated security setting on the device, comprising:
- an input interface for importing a software installation file for update or installation of an application for execution in a runtime environment on the device, wherein the software installation file is protected (e.g. signed with a cryptographic checksum) and comprises or references program code, which may be directly executable and is typically formatted as a binary file, and additionally comprises or references at least one security setting or an update thereof;
- a verification unit (which may be part of the operating system kernel) for verifying the imported protected software installation file by applying a first cryptographic (checksum) algorithm;
- an enforcement unit which is dedicated to enforce the at least one security setting in case of successful verification through the verification unit.

In another aspect the invention also refers to a system for updating and enforcing an updated security setting on a plurality of autonomous electronic control devices, comprising:
- A central control node for providing a software installation file, for update or installation of an application for execution on at least one of the devices, wherein the software installation file is protected (signed) and comprises or references executable program code and additionally comprises or references at least one updated security setting;
- At least one device as described above.

Those skilled in the art will further appreciate that functions explained hereinabove may be implemented using individual hardware circuitry, using software functioning in conjunction with a programmed microprocessor or microcontroller, using an application specific integrated circuit (ASIC) and/or using one or more digital signal processors (DSPs). It will also be appreciated that when the current invention is described as a method with respective method steps, it may also be embodied in a computer processor and a memory coupled to a processor, wherein the memory is encoded with one or more programs that perform the methods disclosed herein when executed by the processor. Further, the method may also be embodied in hardware circuitry.

In the following a short definition of terms is given.

The term security setting may refer to a mandatory access control policy (also abbreviated as MAC policy). It relates to a set of security rules for accessing resources on the device. The set of security rules precisely defines which application - or which security domain in which an application is executed - has access to a resource on the device, in particular to a process running on the device or to data, and the extent of access once the resource is accessed. The MAC policy is usually enforced by the operating system kernel. The security setting may be received and processed on the (embedded) device for the first time for the respective application (in this case the updated version is identical to the original version) or in an updated form in order to actualize or update a preceding instance of the security setting.

The industrial device may be an embedded system, an industrial control device, a control computing entity and/or a control unit in different types of systems, such as railway monitoring devices or devices controlling a manufacturing process in automation, robot and/or a network switch. The network switch may in particular be part of a software defined network (SDN). The device may be an SDN controller, a mobile base station or an access point in a wireless network, like a WLAN access point.

The central control node may be deployed as a computing instance or entity, like e.g. a central server or computer with administration function for the plurality of embedded devices, connected via bus or network (wireless or wired connection). It may further be dedicated to issue the security settings (MAC policy) or updates thereof.

The autonomous electronic/digital control device (in short: device) is part of a network and may cooperate with other devices. The device may be an embedded system, an internet of things device or a device in the context of industrial internet, a cyber-physical system, or a device within a cloud computing or cognitive computing system. The devices are connected via a network. The network may be a physical, a virtual and/or a logical network or a network slice.

An application is to be understood as a process running on the device. It may be an application, providing a particular functionality for example in an embedded system. The application may be deployed as firmware or software. The application may comprise an executable computer program, which typically is provided and stored in a binary file format.

A kernel is to be construed as a computer program of a computer's operating system, with complete control over every process in the computing system (or embedded system). Usually, the kernel is one of the first programs loaded on start-up (after the bootloader) on the device. A kernel connects the application software to the hardware of the device. With respect to security, the critical code of the kernel is usually loaded into a protected area of memory, so that it cannot be mixed or overwritten by applications or other processes, executed on the device.

A security domain is a set of rules and settings relating to security of the device and it may, in particular, refer to a logical grouping of rules in a security setting. Such an application will be allocated to a specific security domain.

A cryptographic algorithm is to be construed as a cryptographic algorithm for the purpose of detecting errors which may have been introduced during data transmission or storage, in this case of the software installation file with an updated security setting. According to a preferred embodiment the cryptographic algorithm is a checksum algorithm that serves to proof authenticity and integrity of the software installation file with its additional security setting component(s). In a preparation phase the sending node of the software installation file (comprising the security setting update), which may be a central node, interacts with the devices and optionally with a public key infrastructure instance (PKI) in order to negotiate and define the checksums or the other public keys of the cryptographic algorithm. The cryptographic algorithm is based on a mathematical algorithm that maps data of arbitrary size to a bit string of a fixed size (a hash) which is designed to also be a one-way function, that is, a function which is infeasible to invert. The cryptographic algorithm may be based on a RSA (Rivest-Shamir-Adleman) algorithm or another Digital Signature Algorithm (DSA).

The term verifying is to be understood as verifying the authenticity and integrity of received data, i.e. of the software installation file with its additional security setting component(s). In particular, it relates to checking the signature of the received data. The data is protected by adding a signature to the data to be transmitted to the devices.

### BRIEF DESCRIPTION OF THE DRAWINGS

- Fig. 1: shows a schematic representation of a system for enforcing an updating of a security setting on a device in an overview manner.
- Fig. 2: shows a more detailed schematic representation of an embedded device according to a preferred embodiment of the invention.
- Fig. 3: represents another preferred embodiment of a software installation file for the device.
- Fig. 4: represents another preferred embodiment of a software installation file for the device.
- Fig. 5: is a flow chart for enforcing a security setting according to a preferred embodiment of the invention.
- Fig. 6: shows a variant of the flow chart, represented in Fig. 5 according to another preferred embodiment of the invention.
- Fig. 7: represents another preferred embodiment of a software installation file for the device.
- Fig. 8: shows another flow chart of an enforcement process according to a preferred embodiment of the invention.
- Fig. 9: shows a flow chart for enforcing a security setting according to a preferred embodiment of the invention.
- Fig. 10: is a schematic drawing of a device with its submodules according to a preferred embodiment of the invention.

### DETAILED DESCRIPTION OF THE DRAWINGS

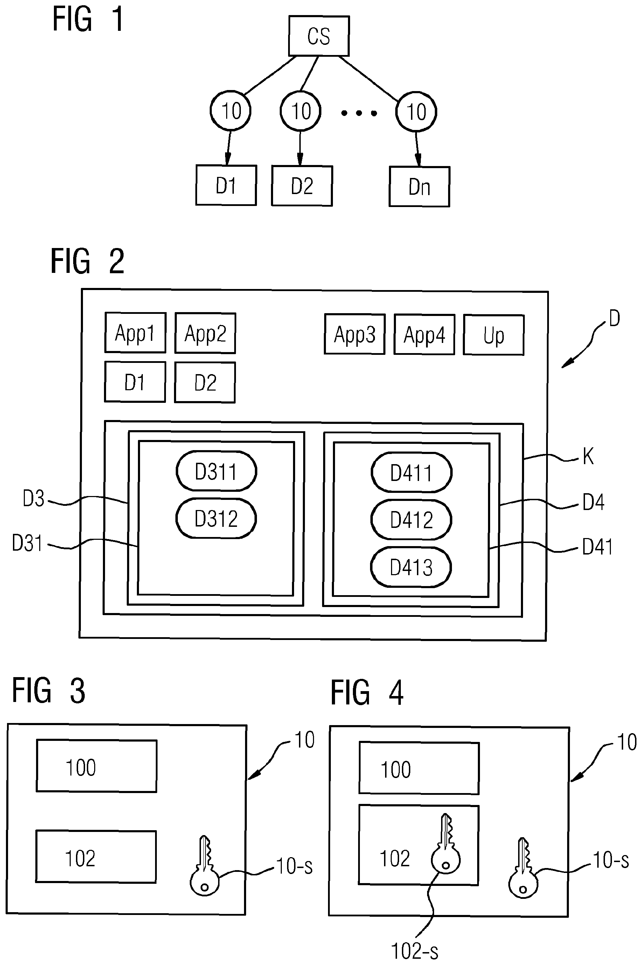

Figure 1 shows an overview of an enforcement system for enforcing an updated security setting (for example a MAC policy) on an autonomous electronic control device D, which might be an embedded system or may be deployed as system on chip (SOC) with typical computing entities, such as a microcontroller and an operating system kernel K, memory and peripherals.

In the example embodiment shown in Fig. 1, a central control node cs provides a software installation file 10. The software installation file 10 comprises a security setting 102 (or an update thereof), e.g. a MAC policy or a MAC policy update. The updated security setting 102 is provided to the devices D1, D2,...Dn via network connection.

Figure 2 shows a more detailed architecture of the device D in the form of an embedded device with an exemplary embodiment with a first application Appl, a second application App2, a control application App3, a diagnosis application App4 and a firmware update application Up. In this example, the embedded device D further comprises an application runtime D1, an application manager D2, which is responsible for loading and updating the applications, and an operating system kernel K. In this example, two different MAC security systems D3, D4 are deployed, for example an AppArmor module D3 and a SELinux module D4 with a MAC policy, wherein each of the MAC policies may comprise several policy segments, like a standard application policy D311, an App2 policy D312, which both are part of a AppArmor MAC policy D31. The second MAC security system relates to an SELinux system D4 with a SE MAC policy D41 and with a control application policy D411, a diagnosis application policy D412 and a base system policy D413. AppArmor ("Application Armor") is a Linux kernel security module that allows to restrict programs' capabilities with per-program profiles. Profiles can allow capabilities like network access, raw socket access, and the permission to read, write, or execute files on matching paths. AppArmor supplements the traditional Unix discretionary access control (DAC) model by providing a MAC control. Security-Enhanced Linux (SELinux) is another Linux kernel security module that provides a mechanism for supporting access control security policies, including MAC.

Generally, the software installation file 10 may comprise a security setting 102 in the form of a MAC policy or an updated MAC policy. A firmware update may be received for the base system or dedicatedly for a particular application Appl, App2, App3.... The software installation file 10 is protected, e.g. by means of a digital signature or a first cryptographic algorithm.

A software installation file 10 may comprise a MAC policy, a segment or part of a MAC policy or a delta policy, which only comprises the amendments or changes with respect to the respective preceding or prior security setting / MAC policy. The (updated) MAC policy 102 may be directly incorporated into the software installation file 10 or may be embedded by reference or link, such as a URL.

Figure 3 shows a schematic representation of a software installation file 10, comprising the program code 100 (for update of the respective application Appl, App2,...) and an (updated) MAC policy 102. In the example embodiment, the software installation file 10 is digitally protected according to a first cryptographic algorithm. The first cryptographic algorithm may be executed by signing the software installation file 10 with a software installation file signature 10-s which in this case serves as MAC policy signature, too.

Figure 4 relates to another embodiment of a software installation file 10, comprising the program code 100 and the (updated) MAC policy 102, wherein the software installation file 10 is digitally protected again with the first cryptographic algorithm. This may be realized by signing - like in Fig. 3 - the software installation file with the regular software installation file signature 10-s and wherein the MAC policy segment 102 is in addition protected with a second cryptographic algorithm. The second cryptographic algorithm may be realized by signing the software installation file 10 with a MAC policy signature 102-s.

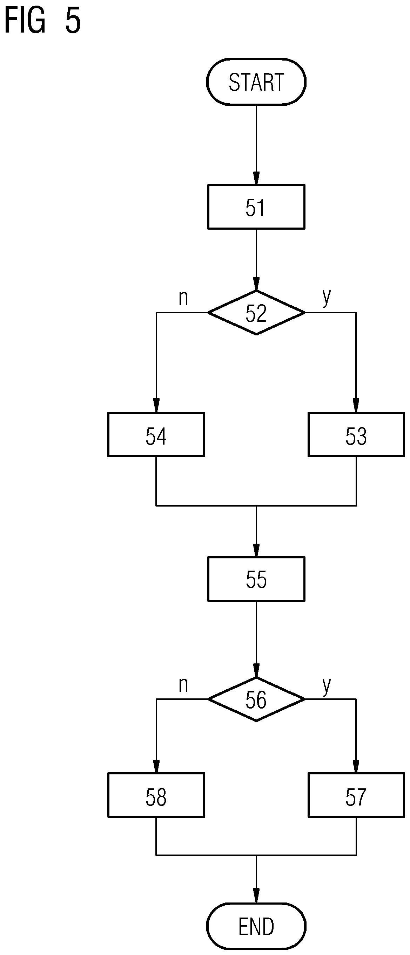

Figure 5 shows an example flow chart for an update and enforcement method according to a preferred embodiment. After start, in step 51 the software installation file is received, loaded or imported on the device D. In step 52 it is checked whether a MAC policy is included in the software installation file 10. Thereinafter, a signature verification key, which is a public key of the public key cryptographic algorithm is determined based on or in dependence of an inclusion state of the received file. The inclusion state is detected automatically and represents whether or not an (updated) MAC policy 102 is included in the software installation file 10 or not. If yes (shown in Fig. 5 with the right path, referenced with "y") a MAC signature verification key is determined in step 53. If no MAC policy was included in the software installation file 10 it is branched on the left side (shown in Fig. 5 with the left path, referenced with "n" for no) to determine the update signature verification key in step 54, which will be used for update of the application on the device D. After that, the signature is checked in step 55. If the signature is found to be valid in step 56 it is branched to the right path, referenced with "y" and in step 57 the installation file is accepted on the device D. Otherwise, if the signature was found to be not valid in step 56 it is branched to the left path, referenced with "n" and in step 58 the installation file is rejected on the device D. Afterwards the method ends. In this embodiment, two different (signature verification) keys or algorithms are used: a first key or cryptographic algorithm is used for verification of those software installation files 10, which comprise a MAC policy (or a security setting) and a second key or second cryptographic algorithm is used for verification of those software installation files 10, which do not comprise a MAC policy (or a security setting).

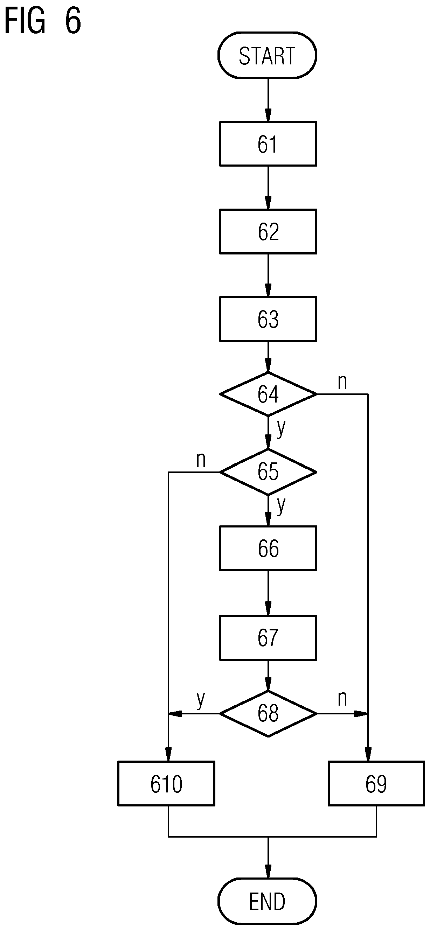

Figure 6 shows another example embodiment. After start in step 61 the software installation file 10 is loaded or imported in the device. In step 62 the update signature verification key is determined and in step 63 the signature is checked. If it is determined in step 64 that the signature is valid, the method continues with step 65 below (referenced with the path "y"), where it is checked whether or not a MAC policy is included in the software installation file 10. If it is determined in step 64 that the signature is not valid, the method continues with step 69 in order to reject the installation file 10 (right path, referenced with "n"). If no MAC policy is included, the method continues form step 65 with the path "n" (left side) to step 610, where the software installation file is accepted. If a MAC policy is included, after step 65, the method continues with step 66 to determine the MAC signature verification key. In step 67 the MAC policy signature is checked. If it is found not to be valid in step 68 the method continues with path "n" and step 69 (rejection) and otherwise (validation) the method continues with path "y" and step 610 (acceptance) before the method ends. Generally, an installation file which comprises a security setting is protected with two signatures: a first signature or a first applied cryptographic algorithm for protecting the software installation file 10 as such and a second signature or a second applied cryptographic algorithm for protecting the security setting 102 or an update thereof, included in the software installation file 10.

In some cases, a local MAC policy or security setting may be configured such that firmware updates or installations of (new or updated) applications are generally not allowed. In this case, the invention suggests to apply a temporary security setting first before the method for enforcing the updated security as described above is executed. The temporary security setting is configured so that firmware updates and installations of applications are allowed. For this purpose, the sequence of examination or verification steps may be changed. The aforementioned temporary security settings can be reverted to the previous state after the update is complete.

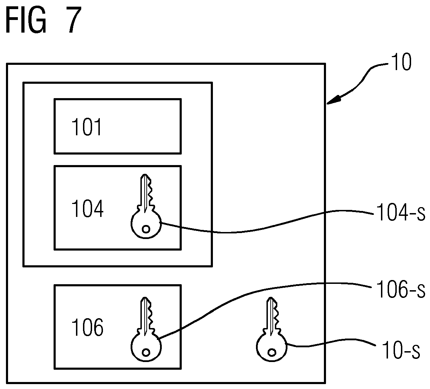

Therefore, in another preferred embodiment, shown in Figure 7, the software installation file 10 comprises a first segment for the program code in the form of an application 101, a second segment in the form of a MAC policy application 104, which is protected with a MAC application policy signature 104-s. Further, the software installation file 10 comprises a third segment with a MAC install policy 106, which in turn is protected with a MAC install policy signature 106-s. The software installation file 10 is protected with the regular firmware update signature 10-s.

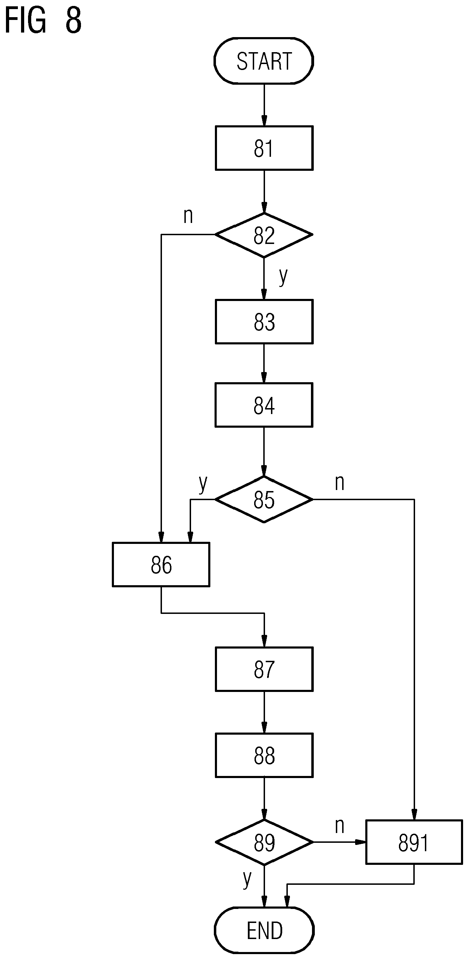

An example flow chart is shown in Figure 8. After start of the method, the software installation file 10 is received and provided on the device D in step 81. In step 82 it is determined if a MAC policy is included. In step 83 a MAC signature verification key is determined and in step 84 the MAC policy signature is checked. In step 85 it is checked if a valid installation is allowed. If yes (path "y") the installation file is accepted in step 86. Otherwise (not allowed - path "n") the installation file is rejected in step 891. In case the installation file is accepted (step 86) the update signature verification key is determined in step 87 and in step 89 the signature is checked. If the signature turns out to be valid in step 89 the method ends, otherwise (not valid - path "n") the installation file is rejected in step 891.

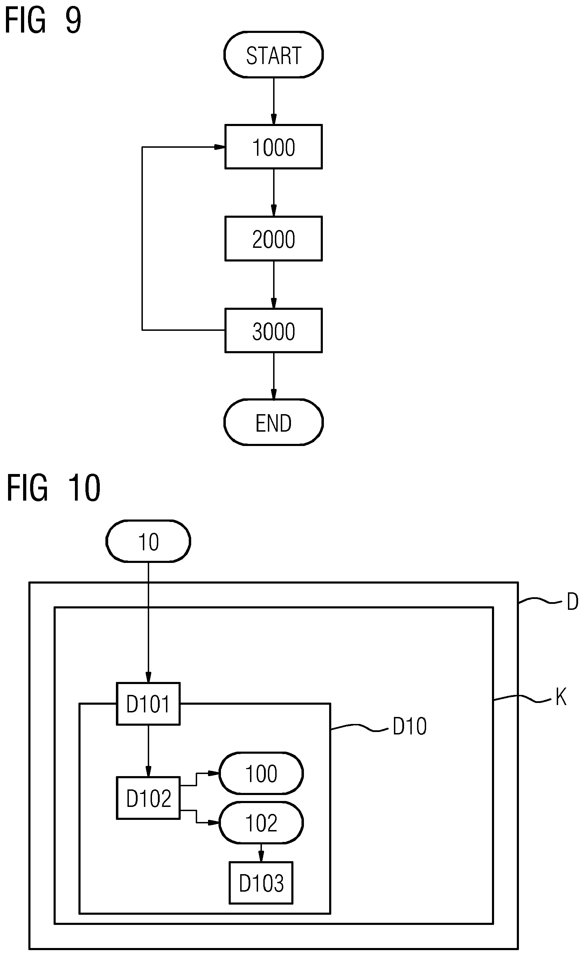

Figure 9 shows a flow chart of a method for enforcing an updated security setting 102 on the device D. After start, the software installation file 10 is received in step 1000. In step 2000 the signature of the received software installation file 10 is checked by applying a first cryptographic checksum or algorithm for providing the updated security setting 102. In step 3000 the signature of the provided updated security setting 102 is checked by applying a second cryptographic checksum or algorithm.

Figure 10 shows a device with its sub modules in more detail. An updater unit D10 may be provided in the kernel K of the operating system on the device D. The updater unit D10 is responsible for locally enforcing security setting and updates thereof. The updater unit D10 comprises an input interface D101 for importing the software installation file 10, a verification unit D102 for verification of the same and determination of the respective signatures. As described above, different signatures may be used to define the admissibility conditions for an update of the security settings 102 (e.g. if at all and if yes, to what extent). The verification unit provides as a result a verification result (verification successful or denied) and the update for the application 100 and the security settings 102, in particular in the form of processor executable instructions, which may be used by the enforcement unit D103 for instructing the kernel K to implement the updated security settings directly.

While the current invention has been described in relation to its preferred embodiments, it is to be understood that this description is for illustrative purposes only. For example, the device D may be an embedded system or another technical apparatus in an automation system, for example being administered by a network element. For the person skilled in the art it is clear that the invention may also be used for devices D communicating via different networks NW. For example, the network NW may be a wireless network or a network based on TCP/IP. Further, different security settings systems may be used, like e.g. AppArmor or SELinux.

Accordingly, it is intended that the invention be limited only by the scope of the claims appended hereto.

## Claims

1. Method for enforcing an updated security setting (102) on a device, which is an autonomous electronic control device (D), comprising the steps:
- receiving (1000) a software installation file (10) for update or installation of an application for execution on the device (D),
o wherein the software installation file (10) is protected; and
o wherein the software installation file (10) comprises or references executable program code (100);
o wherein the software installation file (10) comprises or references at least one updated security setting (102); and
- verifying (2000) the received software installation file (10) by applying a first cryptographic algorithm for providing the updated security setting (102);
- enforcing (3000) the provided updated security setting (102) .

2. Method according to claim 1, wherein the software installation file (10) is a firmware update or a loadable application.

3. Method according to any of the preceding claims, wherein the updated security setting (102) is a centrally controlled setting, which is enforced independently from user-defined permissions and, in particular, is a MAC policy.

4. Method according to any of the preceding claims, wherein the security setting is updated in reply to a device configuration parameter set, which is detected locally and directly on the device (D).

5. Method according to any of the preceding claims, wherein the updated security setting (102) comprises a delta policy with a description of changes in the updated security setting (102) compared to a preceding security setting.

6. Method according to any of the preceding claims, wherein the updated security setting (102) is directly incorporated in the software installation file (10) or is indirectly incorporated via a reference/link.

7. Method according to any of the preceding claims, wherein the updated security setting (102) is additionally protected with a second cryptographic algorithm.

8. Method according to any of the preceding claims, wherein the first and/or second cryptographic algorithm is based on an asymmetric cryptographic process.

9. Method according to any of the preceding claims, wherein an actual security setting is first switched to a temporary security setting before the updated security setting (102) is applied, in case the security setting does not allow changing applications on the device (D).

10. Method according to any of the preceding claims, wherein the method comprises to determine which key was used for protection of the software installation file (10) and based on the determination a decision algorithm determines if at all and if yes, to what extent the security setting on the device (D) is allowed to be changed.

11. Computer program with program code for executing a method according to any of the preceding method claims, if the computer program is executed on an autonomous electronic control device (D) and in particular in a kernel (K) of an operating system of the device (D).

12. Device, being an autonomous electronic control device (D) with an updater unit (D10) for updating and enforcing an updated security setting (102) on the device (D), comprising:
- an input interface (D101) for importing a software installation file (10), for update or installation of an application for execution on the device (D), wherein the software installation file (10) is protected and in particular signed and comprises or references executable program code (100) and additionally comprises or references at least one updated security setting (102);
- a verification unit (D102) for verifying and providing the imported protected software installation file (10) by applying a first cryptographic algorithm;
- an enforcement unit (D103) which is dedicated to enforce the provided updated security settings (102) in case of verification.

13. System for updating and enforcing an updated security setting (102) on at least one device of a plurality of devices, being autonomous electronic control devices (D), comprising:
- A central control node (cs) for providing a software installation file (10), for update or installation of an application for execution on at least one of the devices (D), wherein the software installation file (10) is protected and in particular signed and comprises or references executable program code (100) and additionally comprises or references at least one updated security setting (102);
- At least one device (D) according to the directly preceding device claim.
